# EUROPEAN PATENT SPECIFICATION

(11) **EP 3 835 132 B1**
(45) Date of publication and mention of the grant of the patent: **22.06.2022**
(21) Application number: 19215922.6
(22) Date of filing: 13.12.2019
(51) Int. Cl.: B60R 7/04, B60H 1/00, B60R 13/02, B62D 25/14

(54) **INTERIOR TRIM PART OF A VEHICLE COMPRISING A SELF-SUPPORTING CARRIER STRUCTURE, PROCESS FOR MANUFACTURING AN INTERIOR TRIM PART AND A VEHICLE EQUIPPED WITH SUCH A TRIM PART**
INNENVERKLEIDUNGSTEIL EINES FAHRZEUGS MIT EINER SELBSTTRAGENDEN TRÄGERSTRUKTUR, VERFAHREN ZUR HERSTELLUNG EINES INNENVERKLEIDUNGSTEILS UND EIN MIT EINEM SOLCHEN VERKLEIDUNGSTEIL AUSGESTATTETES FAHRZEUG
PIÈCE DE GARNITURE INTÉRIEURE DE VÉHICULE COMPRENANT UNE STRUCTURE DE SUPPORT AUTOPORTANT, PROCÉDÉ DE FABRICATION D'UNE PIÈCE DE GARNITURE INTÉRIEURE ET VÉHICULE ÉQUIPÉ D'UNE TELLE PIÈCE DE GARNITURE

(43) Date of publication of application: 16.06.2021
(73) Proprietor: Motherson Innovations Company Limited, London EC2N 2AX (GB)
(72) Inventor: Dormanns, Jan, 79183 Waldkirch (DE); Rinderlin, Jürgen, 79211 Denzlingen (DE); Heinz, Christoph, 79115 Freiburg (DE); Wehrle, Fabian, 79274 St. Märgen (DE)
(74) Representative: Westphal, Mussgnug & Partner Patentanwälte mbB

(56) References cited:
- EP-A1- 3 508 399
- DE-A1-102007 016 982
- US-A1- 2007 245 758
- US-B1- 6 520 849

## Description

The present disclosure relates to an interior trim part of a vehicle comprising a self-supporting carrier structure. Furthermore, the present disclosure is directed to a process for manufacturing such an interior trim part and a vehicle equipped with such an interior trim part.

In the pursuit of reducing the global carbon dioxide emissions the attention of car makers and suppliers increases to reduce the weight of automobiles, including the aim to reduce the weight of interior trim parts such as center consoles and its carrier structure. A great deal of potential to reduce carbon dioxide emissions is seen in electrically powered vehicles. However, their range depends on the weight of the vehicle. As the range is a central issue in the acceptance of electrically powered vehicles, weight reduction is even more important.

US 2019/0161031 A1 discloses a concept for reducing the weight of components of a vehicle. A development process for optimizing the carrier structure of the dashboard is to conduct a load path analysis using bionic topology optimization using methods like "soft-kill-option". The resulting carrier structure provides a high rigidity at a reduced material volume. As a consequence, the weight of the carrier structure so obtained is significantly lower compared to prior art dashboards mounted on a cross beam. However, load path analyses conducted as described above typically result in solid support elements.

Further examples of interior trim parts are disclosed in DE 10 2007 016 982 A1, in S 6 520 849 B1 and US 2007/245758 A1.

EP 3 508 399 A1 discloses an interior trim part according to the preamble of claim 1, and furthermore describes a method to conduct the bionic topology optimization such that a carrier structure of an instrument panel is obtained comprising a network of a plurality of hollow and solid support elements. This bionic topology optimization can be considered as a second load path analysis that follows the first load path analysis as described above. In the second load path analysis respective boundary conditions have to be defined. These boundary conditions may include the identification of support elements that should be hollow. EP 3 508 399 A1 describes the use of hollow support elements as air ducts for guiding air into a passenger compartment of a given vehicle. For this purpose at least some of the hollow support elements are arranged in a coherent network. The instrument panel comprising a self-supporting carrier structure obtained as described offers a high degree of functional integration and lightweight construction.

Although the weight of the instrument panel disclosed in EP 3 508 399 A1 is significantly lower compared to conventional instrument panels, there is the need to find ways to further reduce the weight of the interior trim parts. It is one task of the present disclosure to present an interior trim part that even further exploits the potential of weight reduction inherent to bionic topology optimization. Beyond that it is one objective of the present disclosure to present a method by which such interior trim parts may be manufactured in a fast and cost-efficient way. Furthermore, an embodiment of the present disclosure has the objective to provide a vehicle comprising at least one such trim part.

According to one embodiment of the present disclosure an interior trim part of a vehicle comprises a self-supporting carrier structure. The self-supporting carrier structure comprises
- a network of a plurality of hollow support elements and solid support elements arranged according to the results of a load path analysis,
- wherein the hollow support elements form at least one manifold used as an air duct comprising at least one air inlet for introducing air into the hollow support elements and at least one air outlet for guiding the air into a passenger compartment of a vehicle, wherein
- at least one of the hollow support elements and/or one of the solid support elements form at least one functional entity by which a function can be integrated into the interior trim part.

The present disclosure is based on the perception that the weight of the interior trim parts can further be reduced when more functions are integrated to the interior trim part in that functional entities are formed by the hollow support elements and/or the solid support elements. In known interior trim parts such functional entities are formed by additional parts that are made of metal or plastics. In case of metal the functional entities usually add to the total weight of the interior trim part which is counteracting the aim to reduce the weight of the vehicle. Regardless of the fact of whether or not the functional entities are made of plastic or metal an additional mounting step is needed which prolongs the manufacturing process. According to the present disclosure the functional entities are formed in the same process and are made of the same material as the hollow or solid support elements. As a consequence, the additional weight is kept low. Moreover, the manufacturing process is kept simple.

In accordance with the invention at least some of the hollow support elements and/or at least some of the solid support elements are arranged such that they form
- an intersection in which one hollow support element or one solid support element penetrates another hollow support element, or
- a fusion section in which one hollow support element or one solid support element merges with another hollow support element.

According to the invention the hollow support elements may be intersected by or merge with another hollow support element or the solid support elements. The possibility to integrate intersections and/or fusion sections into the network significantly increases the freedom of design regarding shape, course and dimensions of the support elements. The optimization of the air flow and the load paths can be realized to a significantly higher degree than previously possible. In consequence of the optimized load paths the respective support elements may be provided with smaller dimensions which lead to a reduced weight of the interior trim part.

According to one embodiment the functional entity is formed by at least one hollow support element and forms a receptacle for an air treatment device interacting with the air flowing through the hollow support element. Modern vehicles are often equipped with air treatment devices to enhance the air quality inside the passenger compartment. However, such air treatment devices are often available as optional equipment. The receptacle for an air treatment device can be formed such that depending on whether or not the air treatment device is ordered the receptacle can either receive the air treatment device or a blind cover. The complexity of the manufacturing process is thus kept low.

In a further embodiment the air treatment device is an air filter, an ionizer, an air humidifier or an air temperature regulation device. In these embodiments the air treatment device may be arranged in the receptacle such that it protrudes into the hollow support element to directly interact with the air flowing therethrough. Alternatively in case the air treatment device is embodied as an air temperature regulation device the latter may surround the hollow support element and indirectly interact with the air flowing through the hollow support element.

According to one embodiment the functional entity is formed by the hollow support element and forms a receptacle for an object to be temperature regulated by interacting with the air flowing through the hollow support element or through the receptacle. In this embodiment the air flowing through the hollow support element may be used to regulate the temperature of an object that is placed into the functional entity formed by the hollow support element. Separate temperature regulation devices such as Peltier elements or other heating or cooling elements or additional fluid ducts may be omitted, thereby keeping the weight and the installation effort of the interior trim part low. Due to the reduced weight the electricity consumption of the vehicle equipped with such a trim part can be kept low.

In a further embodiment the object is an electric or electronic device or a container for comestibles. The number of electric or electronical devices mounted in modern vehicles is constantly increasing. There is thus a need to dissipate the heat they are producing. The air flowing through the hollow support elements can thus be used to dissipate the heat to prevent the electric or electronical device fromoverheating. The object may also be a container for comestibles such as a beverage can. The air flowing through the hollow support element can thus be used to regulate the temperature, in particular to cool the beverage contained in the beverage can. If desired the beverage may also be warmed, or e.g. in the case of a coffee mug be kept at a warm temperature for a longer time, by the air flowing through the hollow support element.

In accordance with another embodiment the functional entity forms a fastening section by which the interior trim part may be fastened to a support structure of the vehicle and/or by which a decor element or cushions or the like may be fastened to the interior trim part. Fastening sections may in particular be hooks or loops by which the interior trim part may be fastened to support structures of the vehicle.

According to one embodiment the interior trim part comprises a cover layer at least partially covering the self-supporting carrier structure. Depending on the kind of interior trim part one or more separate decor elements are fastened to the carrier structure. However, in some cases a fairly simple cover layer may be sufficient to cover the carrier structure. The carrier structure may be made of the same material as the hollow and the solid support elements and be manufactured simultaneously so that no additional manufacturing step is needed. Again the manufacturing process is kept simple.

In a further embodiment at least the self-supporting carrier structure is made of a fiber-reinforced plastic. Fiber-reinforced plastic provides a high degree of rigidity to the interior trim part such that the number of hollow and solid support elements or at least their thickness may be reduced. The use of double walls as frequently encountered in interior trim parts due to manufacturing limitations in injection molding may become superfluous. Thus the dimensions of the trim parts can be kept small, thereby creating additional space inside the passenger compartment. The passenger compartment may provide sufficient space for rotatable seats. The size of stowage compartments may be increased. Due to the reduced thickness material and weight may be saved.

In accordance with another embodiment the interior trim part is embodied as a dashboard, a center console, an overhead console, a door trim part or a pillar trim part. The technical effects of the functional entities as previously described are particularly relevant for the dashboard and the center console. As the dashboard and the center console are exposed to relatively high mechanical loads they bear a fairly large potential of weight reduction using the concept presented above.

As already noted the number of electric or electronical devices is constantly increasing. The other embodiments of the interior trim part such as the overhead console, the door trim part or the pillar trim part may also be used for the integration of functions, in particular provided by electric or electronical devices but also by the entities described above.

A realization of the present disclosure is directed to a process for manufacturing an interior trim part according to one of the embodiments previously presented comprising the steps of additive manufacturing, in particular of fused deposition modelling, screw extrusion additive manufacturing or selective laser sintering. These steps make it possible to manufacture complex structures that could not previously be manufactured. One or more thermosetting or thermoplastic resins may be used as materials for the interior trim part.

In particular in case of dashboards and center consoles known in the prior art support elements made of metal such as steel, aluminum or magnesium are used to provide the required rigidity. As mentioned the use of additive manufacturing offers the possibility to provide complex structures that provide a rigidity that does not require the employment of support elements of metal. The weight can significantly be reduced and the mounting facilitated.

According to a realization of the present disclosure the self-supporting carrier structure is a structure completely printed in one piece, completely printed in several pieces, or is a hybrid structure with printed parts and/or injection molded polymer parts and/or milled, pressed, bent, welded or pressure die-cast metal parts. In this realization the carrier structure can be flexibly adjusted to different load cases without the limitation to one particular material.

According to another realization the self-supporting carrier structure and/or the cover layer or the interior trim part are made in one piece. The production process is thereby optimized, as mounting and bonding steps, such as screwing or welding are omitted and processing time and equipment invest are reduced. The use of additive manufacturing, particularly of fused deposition modeling, screw extrusion additive manufacturing, selective laser sintering or thermoplastic additive manufacturing enables the manufacturing of the carrier structure, the cover layer or the entire interior trim part in one piece. Moreover, the production process as such is facilitated as the need to transfer the interior trim part from one tool to another can be eliminated.

As mentioned above one may arrange an air treatment device such as a filter in the functional entity that protrudes into the hollow support element and thus into the manifold. The air filter may be directly produced together with the remaining parts of the interior trim part such that no respective installation steps are needed. As also mentioned some functions are offered as optional equipment. Depending on the equipment offered by a given customer the functional entity may be produced or left out or produced and covered by a blind cover. The manufacturing is very flexible.

Another example of the disclosure is directed to a vehicle, comprising an interior trim part according to one of the embodiments previously presented. The technical effects and advantages as discussed with regard to the present interior trim part equally apply to the vehicle. Briefly, the interior trim parts according to the concept described herein may be designed in a weight and space-saving way. The vehicle may thus consume less energy and offer more space in the passenger compartment. Functions may be provided that are so far not applicable due to space limitations of the passenger compartment.

The present disclosure is described in detail with reference to the drawings attached wherein.
- Figure 1: is a perspective view of an interior trim part according to the present disclosure,
- Figure 2: is a sectional view following the plane A-A defined in Figure 1, however, showing an arrangement of the prior art,
- Figure 3A: is a sectional view along the plane A-A defined in Figure 1, showing a first embodiment of a functional entity,
- Figure 3B: is a sectional view following the plane B-B defined in Figure 3A, showing a section of a first alternative of the first embodiment of a functional entity,
- Figure 3C: is a sectional view along the plane B-B defined in Figure 3A, showing a second alternative embodiment of the functional entity in Figure 3B,
- Figure 4: is a principle sectional view through a hollow support structure showing a third embodiment of a functional entity,
- Figure 5: is a principle sectional view through a center console,
- Figures 6A to 6C: are principle sectional views through a hollow support structure showing a fourth embodiment of a functional entity,
- Figures 7A to 7C: are principle sectional views through a hollow support structure showing a fifth embodiment of a functional entity,
- Figures 8A to 8C: are principle sectional views through a hollow support structure showing a sixth embodiment of a functional entity,
- Figures 9A and 9B: are principle sectional views of support structures that form an intersection or a fusion section, respectively, and
- Figure 10: a principle top view on a vehicle comprising at least one internal trim part according to one of the embodiments shown in the previous figures.

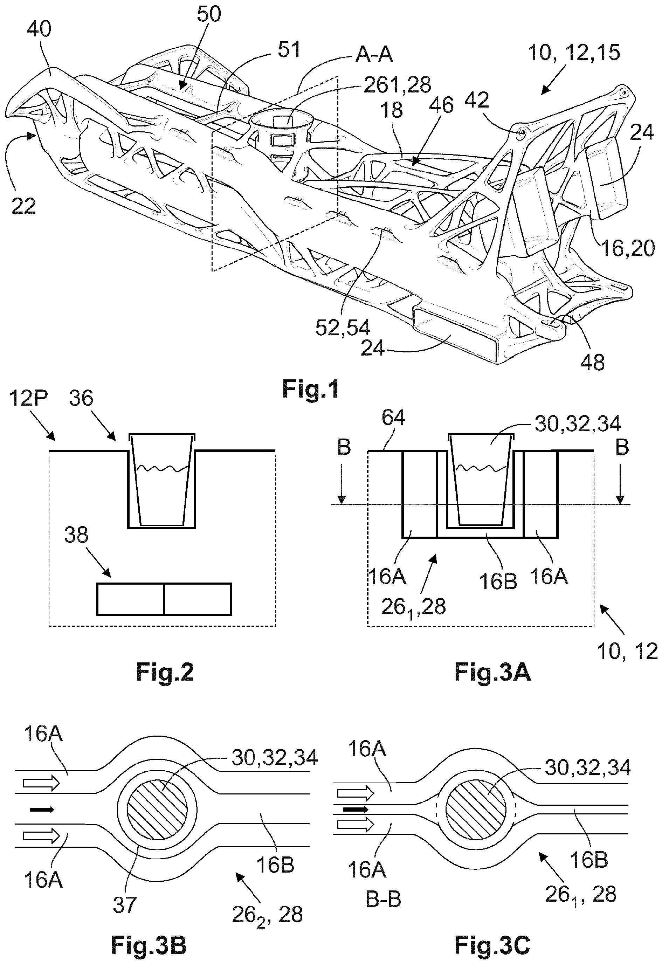

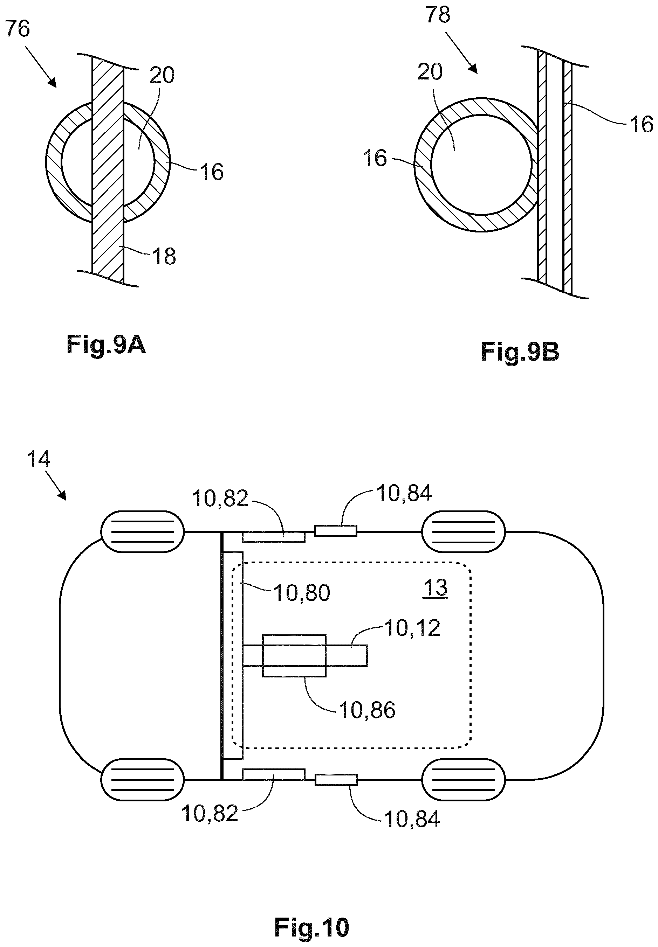

In Figure 1 an interior trim part 10 according to the present disclosure is shown by means of a perspective view. The interior trim part 10 is embodied as a center console 12 arranged in a passenger compartment 13 of a vehicle 14 (see Figure 10) and comprises a self-supporting carrier structure 15 that is composed of network of a plurality of hollow support elements 16 and solid support elements 18 arranged according to the results of a load path analysis leading to a bionic arrangement. The hollow support elements 16 form at least one manifold 20 used as an air duct comprising at least one air inlet 22 for introducing air into the hollow support elements 16 and at least one air outlet 24 for guiding the air into the passenger compartment 13 of the vehicle 14.

Some of the hollow support elements 16 and some of the solid support elements 18 form at least one functional entity 26₁ by which a function can be integrated into the interior trim part 10. A first embodiment of such a functional entity 26₁ is a receptacle 28 for an object 30 to be temperature regulated by interacting with the air flowing through the hollow support element 16. As evident from Figure 1 and Figure 3A the object 30 is a container for comestibles 32, in this case a coffee mug 34. Figure 3C shows the receptacle 28 by means of a cross section along the plane B-B of Figure 3A. Two outer hollow support elements 16A are encompassing an inner hollow support element 16B in the plane of Figure 3C. All of the support elements 16A and 16B guide temperature regulated air through the center console 12. However, only the inner hollow support element 16B guides air to the receptacle 28. The air flowing through the inner hollow support element 16B directly contacts the coffee mug 34 whereas the outer hollow support elements 16A guide the air into the passenger compartment 13 of the vehicle 14.

In case of the coffee mug 34, it is assumed that the coffee contained therein is to be kept warm. In this case the temperature of the air flowing through the two outer hollow support elements 16A is adjusted according to the wishes of the passengers (e.g. warmed in winter, chilled in summer) and the air flowing through the inner hollow support element 16B may be warmed to such a level, that it can significantly decelerate the cooling-down of the coffee.

Figure 3B shows a second embodiment of such a functional entity 26₂ which is to a large extent identical to the first embodiment of the functional entity 26₁. However, the air flowing through the inner hollow support element 16B is not directly contacting the coffee mug 34 but is contacting and temperature regulating a lateral surface wall 37 of the receptacle 28.

As a comparative example Figure 2 shows a simplified sectional view of a center console 12P according to the prior art comprising a cup holder 36 and two air ducts 38. Even if warm air is flowing through the air ducts 38 the cooling-down of the coffee is not decelerated. The prior art air ducts 38 cannot be arranged in a way as shown in Figures 1 and 3A to 3C such that they cannot form a functional entity. A temperature regulation of the cup holder 36 is not possible. Furthermore, the air ducts 38 are not structurally integrated and do not transfer load.

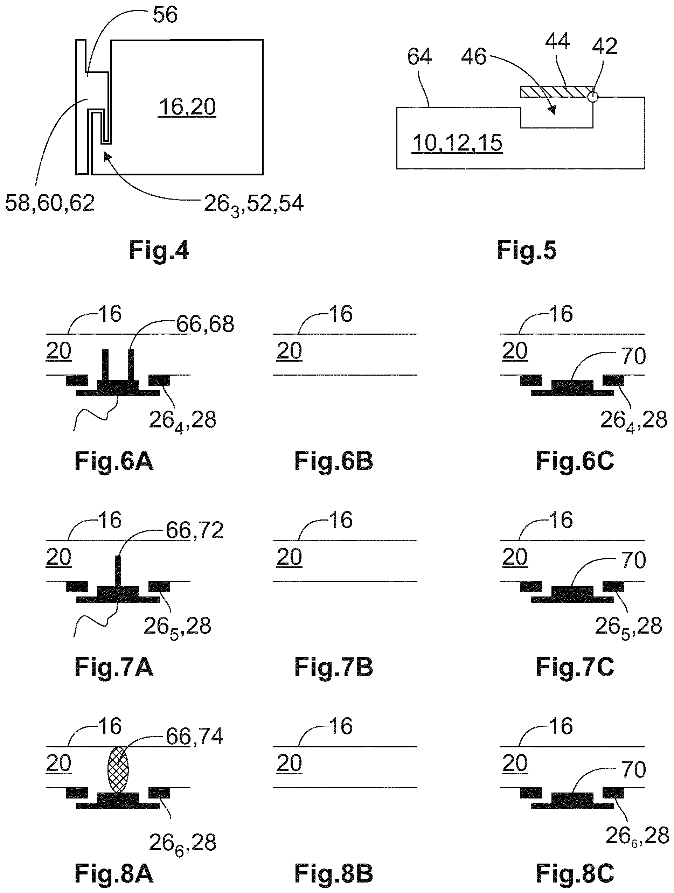

Referring back to Figure 1 the hollow support elements 16 and the solid support elements 18 form further functional entities 26 such as a handle 40 and fastening sections 42 for a movable lid 44 covering a stowage compartment 46 that is also formed by the carrier structure 15 of the center console 12 (see also Figure 5). The solid support elements 18 and the hollow support elements 16 further form attachment points 48 for further modules and form mounting sections 50 and fixing points 51 for electric or electronic devices (not shown).

It is noted that the entire center console 12 may be made in one piece by additive manufacturing, in particular fused deposition modeling, screw extrusion additive manufacturing or selective laser sintering.

Figure 4 shows a third embodiment of a functional entity 26₃ by means of a principle sectional view. In this case the hollow support element 16 forms a fastening section 52 embodied as a hook 54 by which the interior trim part 10 can be fastened to a support structure 56 of the vehicle 14. Alternatively an attachment 58 such as a decor element 60 or a cushion 62 or the like can be fastened to the fastening section 52. The hooks 54 are also shown in Figure 1.

As already mentioned the solid support elements 18 and the hollow support elements 16 form a stowage compartment 46 and fastening sections 52 for a movable lid 44 for opening and closing the stowage compartment 46. The movable lid 44 and the stowage compartment 46 is shown in Figure 5 by means of a principle cross section. Figure 5 further shows that the center console 12 comprises a cover layer 64 that is at least partially covering the self-supporting carrier structure 15.

Figures 6A and 6C are principle sectional views showing a fourth embodiment of a functional entity 26₄. The fourth embodiment of the functional entity 26₄ forms a receptacle 28 for an air treatment device 66 interacting with the air flowing through the hollow support element 16 and thus the manifold 20. As evident from Figure 6A the air treatment device 66 is an ionizer 68 that extends into the hollow support element 16 and interacts with the air flowing through the hollow support element 16. The ionizer 68 may deactivate bacteria and the like and decompose odorous substances contained in the air flowing through the hollow support element 16.

As already mentioned, the center console 12 may be made by additive manufacturing. In many cases air treatment devices 66 are offered as optional equipment. In case the customer does not order an air treatment device 66 the receptacle 28 may not be manufactured (Figure 6B) or may be produced but covered with a blind cover 70 (Figure 6C).

Figures 7A and 7C are principle sectional views showing a fifth embodiment of a functional entity 26₅. In Figure 7A the air treatment device 66 is embodied as an air temperature regulation device 72. As explained for Figures 6B and 6C the receptacle 28 may not be manufactured (Figure 7B) or produced and covered with a blind cover 70 (Figure 7C) in case the customer does not order the air temperature regulation device 72.

It is noted that the air temperature regulation device 72 is a useful add-on that may be located upstream of the receptacle 28 for an object 30 to be tempered as shown in Figures 3A and 3C.

Figures 8A and 8C are principle sectional views showing a sixth embodiment of a functional entity 26₆. In Figure 8A the air treatment device 66 is embodied as an air filter 74. As explained for Figures 6B and 6C the receptacle 28 may not be manufactured (Figure 8B) or produced and covered with a blind cover 70 (Figure 8C) in case the customer does not order the air filter 74. Due to the fact that the center console 12 may be made by additive manufacturing all three options may be flexibly produced.

Figure 9A shows one hollow support element 16 and one solid support element 18 that are arranged such that they form an intersection 76 with each other in which the solid support element 18 penetrates the hollow support elements 16 and thus the manifold 20.

In Figure 9B one hollow support element 16 form a fusion section 78 with another hollow support element 16, however, in this case the hollow support element 16 does not protrude into the manifold 20 of the other hollow support element 16 so that the airflow through the manifold 20 is not influenced.

Figure 10 shows a principle top view of a vehicle 14 comprising a number of interior trim parts 10 according to one of the embodiments previously presented arranged in the passenger compartment 13. In the vehicle 14 shown in Figure 9 the interior trim parts 10 are embodied as a dashboard 80, a center console 12, a door trim part 82, a pillar trim part 84 and an overhead trim part 86.

### Reference list

- 10: interior trim part
- 12: center console
- 13: passenger compartment
- 14: vehicle
- 15: self-supporting carrier structure
- 16: hollow support element
- 16A: outer hollow support element
- 16B: inner hollow support element
- 18: solid support element

- 20: manifold
- 22: air inlet
- 24: air outlet
- 26: functional entity
- 26₁ - 26₆: functional entity
- 28: receptacle

- 30: object
- 32: container for comestibles
- 34: coffee mug
- 36: cup holder
- 37: lateral surface wall
- 38: air duct

- 40: handle
- 42: fastening section
- 44: movable lid
- 46: stowage compartment
- 48: attachment point

- 50: mounting section
- 51: fixing point
- 52: fastening section
- 54: hook
- 56: support structure
- 58: attachment

- 60: decor element
- 62: cushion
- 64: cover layer
- 66: air treatment device
- 68: ionizer

- 70: blind cover
- 72: air temperature regulation device
- 74: air filter
- 76: intersection
- 78: fusion section

- 80: dashboard
- 82: door trim part
- 84: pillar trim part
- 86: overhead trim part

## Claims

1. Interior trim part (10) of a vehicle (14), comprising a self-supporting carrier structure (15), the self-supporting carrier structure (15) comprising
- a network of a plurality of hollow support elements (16) and solid support elements (18) arranged according to the results of a load path analysis,
- wherein the hollow support elements (16) form at least one manifold (16) used as an air duct comprising at least one air inlet (18) for introducing air into the hollow support elements (16) and at least one air outlet (20) for guiding the air into a passenger compartment (13) of a vehicle (14), and
- at least one of the hollow support elements (16) and/or one of the solid support elements (18) form at least one functional entity (26) by which a function can be integrated into the interior trim part
**characterized in that**
- at least some of the hollow support elements (16) and/or at least some of the solid support elements (18) are arranged such that they form
o an intersection (76) in which the hollow support elements (16) penetrate each other or the solid support element (18) penetrates the hollow support elements (16), or
o a fusion section (78) in which the hollow support elements (16) merge with each other or the solid support element (18) merges with the hollow support elements (16) .

2. Interior trim part (10) according to claim 1,
**characterized in that** the functional entity (26) is formed by at least one hollow support element (16) and forms a receptacle (28) for an air treatment device (66) interacting with the air flowing through the hollow support element (16).

3. Interior trim part (10) according to claim 2,
**characterized in that** the air treatment device (66) is an air filter (74), an air ionizer (68), an air humidifier or an air temperature regulation device (72).

4. Interior trim part (10) according to one of the preceding claims, **characterized in that** the functional entity (26) is formed by the hollow support element (16) and forms a receptacle (28) for an object (30) to be temperature regulated by interacting with the air flowing through the hollow support element (16) or through the receptacle (28).

5. Interior trim part (10) according to claim 4,
**characterized in that** the object (30) is an electric or electronic device or a container for comestibles (32).

6. Interior trim part (10) according to one of the preceding claims, **characterized in that** the functional entity (26) forms a fastening section (52) by which the interior trim part (10) may be fastened to a support structure (56) of the vehicle (14) and/or by which a decor element (60) or cushions (62) or the like may be fastened to the interior trim part (10).

7. Interior trim part (10) according to one of the preceding claims, **characterized in that** the interior trim part (10) comprises a cover layer (64) at least partially covering the self-supporting carrier structure (15).

8. Interior trim part (10) according to one of the preceding claims, **characterized in that** at least the self-supporting carrier structure (15) is made of a fiber-reinforced plastic.

9. Interior trim part (10) according to one of the preceding claims, **characterized in that** the interior trim part (10) is embodied as a dashboard (80), a center console (12), an overhead console (86), a door trim part (82) or a pillar trim part (84).

10. Process for manufacturing an interior trim part (10) according to one of the preceding claims, comprising the steps of additive manufacturing, in particular fused deposition modeling, screw extrusion additive manufacturing, selective laser sintering or thermoplastic additive manufacturing.

11. Process according to claim 11, **characterized in that** the self-supporting carrier structure (15),
- is a structure completely printed in one piece,
- is completely printed in several pieces, or
- is a hybrid structure with printed parts and/or injection molded polymer parts and/or milled, pressed, bent, welded or pressure die-cast metal parts.

12. Process according to claim 11, **characterized in that** the self-supporting carrier structure (15) and/or the cover layer (64), or the interior trim part (10) are made in one piece.

13. Vehicle (14), comprising an interior trim part (10) according to one of the claims 1 to 10.

## Patentansprüche

1. Innenverkleidungsteil (10) eines Fahrzeugs (14), umfassend eine selbsttragende Trägerstruktur (15), wobei die selbsttragende Trägerstruktur (15) Folgendes umfasst:
- ein Netzwerk aus einer Vielzahl von hohlen Stützelementen (16) und massiven Stützelementen (18), die gemäß den Ergebnissen einer Lastpfadanalyse angeordnet sind,
- wobei die hohlen Stützelemente (16) mindestens einen Verteiler (16) bilden, der als Luftkanal verwendet wird, der mindestens einen Lufteinlass (18) zum Einleiten von Luft in die hohlen Stützelemente (16) und mindestens einen Luftauslass (20) zum Führen der Luft in einen Fahrgastraum (13) eines Fahrzeugs (14) umfasst, und
- wobei mindestens eines der hohlen Stützelemente (16) und/oder eines der massiven Stützelemente (18) mindestens eine Funktionseinheit (26) bilden, durch die eine Funktion in das Innenverkleidungsteil integrierbar ist,
**dadurch gekennzeichnet, dass**
- mindestens einige der hohlen Stützelemente (16) und/oder mindestens einige der massiven Stützelemente (18) so angeordnet sind, dass sie
o einen Schnittpunkt (76), in dem sich die hohlen Stützelemente (16) durchdringen oder das massive Stützelement (18) die hohlen Stützelemente (16) durchdringt, oder
o einen Verbindungsabschnitt (78), in dem die hohlen Stützelemente (16) ineinander übergehen oder das massive Stützelement (18) in die hohlen Stützelemente (16) übergeht, bilden.

2. Innenverkleidungsteil (10) nach Anspruch 1,
**dadurch gekennzeichnet, dass** die Funktionseinheit (26) durch mindestens ein hohles Stützelement (16) gebildet ist und einen Behälter (28) für eine Luftbehandlungsvorrichtung (66) bildet, die mit der durch das hohle Stützelement (16) strömenden Luft interagiert.

3. Innenverkleidungsteil (10) nach Anspruch 2,
**dadurch gekennzeichnet, dass** die Luftbehandlungsvorrichtung (66) ein Luftfilter (74), ein Luftionisator (68), ein Luftbefeuchter oder eine Lufttemperaturregelvorrichtung (72) ist.

4. Innenverkleidungsteil (10) nach einem der vorhergehenden Ansprüche, **dadurch gekennzeichnet, dass** die Funktionseinheit (26) durch das hohle Stützelement (16) gebildet ist und einen Behälter (28) für ein Objekt (30) bildet, dessen Temperatur durch Wechselwirkung mit der durch das hohle Stützelement (16) oder durch den Behälter (28) strömenden Luft zu regulieren ist.

5. Innenverkleidungsteil (10) nach Anspruch 4,
**dadurch gekennzeichnet, dass** das Objekt (30) eine elektrische oder elektronische Vorrichtung oder ein Gefäß für Lebensmittel (32) ist.

6. Innenverkleidungsteil (10) nach einem der vorhergehenden Ansprüche, **dadurch gekennzeichnet, dass** die Funktionseinheit (26) einen Befestigungsabschnitt (52) bildet, durch den das Innenverkleidungsteil (10) an einer Stützstruktur (56) des Fahrzeugs (14) befestigbar ist und/oder durch den ein Dekorelement (60) oder Polster (62) oder dergleichen am Innenverkleidungsteil (10) befestigbar sind.

7. Innenverkleidungsteil (10) nach einem der vorhergehenden Ansprüche, **dadurch gekennzeichnet, dass** das Innenverkleidungsteil (10) eine Deckschicht (64), die die selbsttragende Trägerstruktur (15) zumindest teilweise abdeckt, umfasst.

8. Innenverkleidungsteil (10) nach einem der vorhergehenden Ansprüche, **dadurch gekennzeichnet, dass** zumindest die selbsttragende Trägerstruktur (15) aus einem faserverstärkten Kunststoff hergestellt ist.

9. Innenverkleidungsteil (10) nach einem der vorhergehenden Ansprüche, **dadurch gekennzeichnet, dass** das Innenverkleidungsteil (10) als Armaturenbrett (80), Mittelkonsole (12), Dachkonsole (86), Türverkleidungsteil (82) oder ein Säulenverkleidungsteil (84) ausgeführt ist.

10. Verfahren zum Herstellen eines Innenverkleidungsteils (10) nach einem der vorhergehenden Ansprüche, umfassend die Schritte der additiven Fertigung, insbesondere Schmelzschichtung, additive Fertigung mittels Schneckenextrusion, selektives Lasersintern oder thermoplastische additive Fertigung.

11. Verfahren nach Anspruch 11, **dadurch gekennzeichnet, dass** die selbsttragende Trägerstruktur (15),
- eine vollständig in einem Stück gedruckte Struktur ist,
- in mehreren Stücken vollständig gedruckt ist oder
- eine Mischstruktur mit gedruckten Teilen und/oder Spritzguss-Polymerteilen und/oder gefrästen, gepressten, gebogenen, geschweißten oder druckgegossenen Metallteilen ist.

12. Verfahren nach Anspruch 11, **dadurch gekennzeichnet, dass** die selbsttragende Trägerstruktur (15) und/oder die Deckschicht (64) oder das Innenverkleidungsteil (10) in einem Stück hergestellt werden.

13. Fahrzeug (14), umfassend ein Innenverkleidungsteil (10) nach einem der Ansprüche 1 bis 10.

## Revendications

1. Pièce de garniture intérieure (10) de véhicule (14) comprenant une structure autoportante (15),
cette structure autoportante (15) ayant :
- un réseau d'un ensemble d'éléments de supports creux (16) et d'éléments de support pleins (18) organisés selon les résultats de l'analyse d'un chemin de charge,
- les éléments de support creux (16) forment au moins un collecteur (16) utilisé comme conduite d'air comprenant au moins une entrée d'air (18) pour introduire l'air dans les éléments de support creux (16) et au moins une sortie d'air (20) pour guider l'air dans le compartiment de passagers (13) du véhicule (14) et au moins l'un des éléments de support creux (16) et/ou l'un des éléments de support plein (18) forment au moins une entité fonctionnelle (26) qui permet d'intégrer une fonction dans la pièce de garniture intérieure,
pièce **caractérisée en ce que**
au moins certains des éléments de support creux (16) et/ou au moins certains des éléments de support pleins (18) sont organisés de façon à former :
* une intersection (76) dans laquelle les éléments de support creux (16) pénètrent l'un dans l'autre ou l'élément de support plein (18) pénètre dans les éléments de support creux (16), ou
* une section de fusion (78) dans laquelle les éléments de support creux (16) fusionnent l'un avec l'autre ou l'élément de support plein (18) fusionne avec les éléments de support creux (16).

2. Pièce de garniture intérieure (10) selon la revendication 1,
**caractérisée en ce que**
l'ensemble fonctionnel (26) est formé au moins d'un élément de support creux (16) et constitue un réceptacle (28) pour un dispositif de traitement de l'air (66) coopérant avec le flux d'air à travers l'élément de support creux (16).

3. Pièce de garniture intérieure (10) selon la revendication 2, **caractérisée en ce que**
le dispositif de traitement d'air (66) est un filtre à air (74), un ioniseur d'air (68), un humidificateur d'air ou un dispositif de régulation de la température de l'air (72).

4. Pièce de garniture intérieure (10) selon l'une quelconque des revendications précédentes,
**caractérisée en ce que**
l'ensemble fonctionnel (26) est formé d'un élément de support creux (16) et constitue un réceptacle (28) pour un objet (30) dont on veut réguler la température en coopérant avec le flux d'air à travers l'élément de support creux (16) ou à travers le réceptacle (28).

5. Pièce de garniture intérieure (10) selon la revendication 4, **caractérisée en ce que**
l'objet (30) est un dispositif électrique ou électronique ou un réceptacle de combustible (32).

6. Pièce de garniture intérieure (10) selon l'une quelconque des revendications précédentes,
**caractérisée en ce que**
l'ensemble fonctionnel (26) forme une section de fixation (52) permettant de fixer la pièce de garniture intérieure (10) à une structure de support (56) du véhicule (14) et/ou par lequel un élément de décor (60) ou des coussins (62) ou analogues peuvent se fixer à la pièce de garniture intérieure (10).

7. Pièce de garniture intérieure (10) selon l'une quelconque des revendications précédentes,
**caractérisée en ce que**
la pièce (10) comporte une couche de couverture (64) couvrant au moins partiellement la structure autoportante (15).

8. Pièce de garniture intérieure (10) selon l'une quelconque des revendications précédentes,
**caractérisée en ce que**
au moins la structure autoportante (15) est réalisée en une matière plastique renforcée par des fibres.

9. Pièce de garniture intérieure (10) selon l'une quelconque des revendications précédentes,
**caractérisée en ce que**
elle est réalisée sous la forme d'un tableau de bord (80), d'une console centrale (12), d'une console haute (86), d'une pièce de garniture de porte (82) ou d'une pièce de garniture de colonne (84).

10. Procédé de fabrication d'une pièce de garniture intérieure (10) selon l'une quelconque des revendications précédentes, comprenant les étapes suivantes de fabrication additive, en particulier, par la modélisation par dépôt en fusion, la fabrication additive par extrusion par vis, de frittage laser sélectif ou de fabrication additive thermoplastique.

11. Procédé selon la revendication 10,
**caractérisé en ce que**
la structure autoportante (15) est
- une structure complètement imprimée en une pièce,
- une structure complètement imprimée en plusieurs pièces, ou
- une structure hybride avec des pièces imprimées et/ou des pièces en polymère, moulées par injection et/ou broyées, pressées, cintrées, soudées ou en métal coulé sous pression.

12. Procédé selon la revendication 11,
**caractérisé en ce que**
la structure autoportante (15) et/ou la couche de couverture (64) ou la pièce de garniture intérieure (10) sont réalisées en une seule partie.

13. Véhicule (14) comportant une pièce de garniture intérieure (10) selon l'une quelconque des revendications 1 à 10.
